(19) Europäisches Patentamt
European Patent Office
Office européen des brevets

(11) EP 4 794 416 A1

(12) **EUROPEAN PATENT APPLICATION**
published in accordance with Art. 153(4) EPC

(43) Date of publication:
**19.08.2026 Bulletin 2026/34**

(21) Application number: **24884635.4**

(22) Date of filing: **28.10.2024**

(51) International Patent Classification (IPC):
***H04W 72/0446*** *(2023.01)*

(52) Cooperative Patent Classification (CPC):
**H04W 72/0446; H04W 72/0457; H04W 72/12; H04W 72/232**

(86) International application number:
**PCT/CN2024/127633**

(87) International publication number:
**WO 2025/092632 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.11.2023 CN 202311473225**

(71) Applicant: **HUAWEI TECHNOLOGIES CO., LTD.**
**Shenzhen, Guangdong 518129 (CN)**

(72) Inventors:
- **HUANG, Xiuxuan**
**Shenzhen, Guangdong 518129 (CN)**
- **HUA, Meng**
**Shenzhen, Guangdong 518129 (CN)**
- **GAO, Fei**
**Shenzhen, Guangdong 518129 (CN)**
- **DING, Mengying**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **METHOD FOR INDICATING TIME-DOMAIN RESOURCE, AND COMMUNICATION APPARATUS**

(57) This application provides a time domain resource indication method and a communication apparatus. The method includes: In a scenario in which multi-cell scheduling is implemented by using a single DCI, a network device sends configuration information to a terminal device, where the configuration information indicates a time domain resource allocation list, one element in the time domain resource allocation list indicates time domain resource allocation information of M BWPs of K cells, $\mathrm{M} = \sum_{i=1}^{K} M_i$, $M_i$ is a total quantity of BWPs that are of an $i^{th}$ cell in the K cells and that are capable of being indicated by a BWP indicator field, and the BWP indicator field is a field in a DCI used for multi-cell scheduling. In this way, the terminal device can obtain, based on the BWP indicator field and the time domain resource allocation list, time domain resource allocation information of the BWPs indicated by the BWP indicator field, thereby improving efficiency of indicating a time domain resource of a data channel is improved in the scenario in which multi-cell scheduling is implemented by using the single DCI.

Terminal device
Network device
S710: First configuration information
S720: First DCI
S730: Determine a BWP used for data transmission and time domain resource allocation information corresponding to the BWP

FIG. 7

EP 4 794 416 A1

## Description

This application claims priority to Chinese Patent Application No. 202311473225.4, filed with the China National Intellectual Property Administration on November 3, 2023 and entitled "TIME DOMAIN RESOURCE INDICATION METHOD AND COMMUNICATION APPARATUS", which is incorporated herein by reference in its entirety.

## TECHNICAL FIELD

Embodiments of this application relate to the communication field, and more specifically, to a time domain resource indication method and a communication apparatus.

## BACKGROUND

A carrier aggregation (carrier aggregation, CA) technology in a new radio (new radio, NR) communication system is used to increase a transmission bandwidth for a single user. Specifically, in the carrier aggregation technology, integration can be performed on multi-frequency resources, and spectrum resources in a same frequency band or different frequency bands can be aggregated for use by a terminal, to improve resource utilization for an entire network and improve user experience. For example, information in multiple pieces of downlink control information (downlink control information, DCI) may be combined, so that multiple physical downlink shared channels (physical downlink shared channels, PDSCHs) on multiple carriers are simultaneously scheduled by using a single DCI (single DCI).

In a current multi-cell scheduling solution, a time domain resource allocation (time domain resource allocation, TDRA) table is pre-configured to indicate time domain resource information of corresponding PDSCHs on different current carriers. However, in a case of the TDRA table, time domain resource information of some bandwidth parts (bandwidth parts, BWPs) cannot be indicated. Therefore, how to configure an appropriate TDRA table to indicate a time domain resource in a scenario in which multi-cell scheduling is implemented by using a single DCI becomes an urgent problem to be resolved.

## SUMMARY

This application provides a time domain resource indication method, to improve, in a scenario in which multi-cell scheduling is implemented by using a single DCI, efficiency of indicating a time domain resource of a data channel.

According to a first aspect, a time domain resource indication method is provided. The method may be performed by a terminal device, or may be performed by a component (for example, a chip, a circuit, or a chip system) of the terminal device. For ease of understanding, the following uses an example in which the method is performed by the terminal device for description.

The time domain resource indication method includes: The terminal device receives first configuration information from a network device, where the first configuration information indicates a first time domain resource allocation list. Specifically, the first time domain resource allocation list includes at least one element, the at least one element includes a first element, the first element indicates time domain resource allocation information (for example, time domain resource allocation indexes) of M BWPs of K cells, K and M are positive integers, M is greater than or equal to K, $\mathrm{M} = \sum_{i=1}^{K} M_i$, $M_i$ is a total quantity of BWPs that are of an $i^{th}$ cell in the K cells and that are capable of being indicated by a BWP indicator field, the BWP indicator field is a field in a DCI used for multi-cell scheduling, $M_i$ is a positive integer, and i is an integer less than or equal to K. Further, the terminal device further receives a first DCI from the network device, where the first DCI is used to schedule data channels in C (where C is a positive integer less than or equal to K) cells, to implement multi-cell scheduling. The first DCI includes the BWP indicator field, the BWP indicator field indicates C BWPs of the C cells, and the C BWPs are in one-to-one correspondence with the C cells. In other words, the BWP indicator field indicates one BWP of each of the C cells.

Based on the foregoing technical solution, time domain resource allocation information corresponding to each BWP that is capable of being indicated by the BWP indicator field may be determined based on the first time domain resource allocation list configured by the network device. Therefore, a case in which time domain resource allocation information of some BWPs indicated by the BWP indicator field is not available can be avoided. In addition, a case in which a BWP indicated by an element in the first time domain resource allocation list cannot be indicated by the BWP indicator field is avoided, so that redundancy in the time domain resource allocation information is not caused, thereby avoiding an increase in signaling overheads. In this way, efficiency of indicating a time domain resource of a data channel is improved in a scenario in which multi-cell scheduling is implemented by using a single DCI.

With reference to the first aspect, in some implementations of the first aspect, the first DCI further includes a time domain resource allocation field, a scheduled cell set indicator field, and a scheduled cell indicator field, the time domain

resource allocation field indicates the first element, the scheduled cell set indicator field indicates a first cell set, and the scheduled cell indicator field indicates the C cells in the first cell set. The method further includes: The terminal device determines, based on the first element, time domain resource allocation information respectively corresponding to the C BWPs of the C cells.

With reference to the first aspect, in some implementations of the first aspect, when a quantity of BWPs configured for a second cell in the C cells is greater than 2, and a quantity of BWPs configured for a first cell in the C cells is less than or equal to 2, a bit width of the BWP indicator field is 2 bits. The method further includes: determining a first BWP of the first cell based on a value of a least significant bit in the BWP indicator field.

Based on the foregoing technical solution, assuming that the quantity of BWPs configured for the first cell in the C cells is less than or equal to 2, for the first cell, when parsing the BWP indicator field to determine a BWP that is of the first cell and that is indicated by the BWP indicator field, the terminal device may determine the BWP based on the least significant bit in the BWP indicator field, to avoid an error in parsing the BWP indicator field. In other words, in a scenario in which quantities of BWPs configured for cells are different, the terminal device may perform parsing in a flexible manner, so that the BWP indicator field indicates BWPs of different cells, and different quantities of BWPs can be configured for the different cells, thereby improving flexibility of the solution.

With reference to the first aspect, in some implementations of the first aspect, when a BWP that is of a first cell in the C cells and that is indicated by the BWP indicator field is a BWP that is not configured for the first cell, or a BWP that is of a first cell and that is indicated by the BWP indicator field is a BWP in a dormant state, the method further includes: determining not to receive or send data in the first cell; or determining to use an active BWP to perform data transmission in the first cell.

Based on the foregoing technical solution, when the BWP indicated by the BWP indicator field does not exist in the first cell or is in the dormant state in the first cell, the terminal device may not perform data transmission in the first cell, or the terminal device may select an active BWP to perform data transmission, to avoid a failure in data transmission.

According to a second aspect, a time domain resource indication method is provided. The method may be performed by a network device, or may be performed by a component (for example, a chip, a circuit, or a chip system) of the network device. For ease of understanding, the following uses an example in which the method is performed by a terminal device for description.

The time domain resource indication method includes: The network device sends first configuration information to the terminal device, where the first configuration information indicates a first time domain resource allocation list. Specifically, the first time domain resource allocation list includes at least one element, the at least one element includes a first element, the first element indicates time domain resource allocation information (for example, time domain resource allocation indexes) of M BWPs of K cells, K and M are positive integers, M is greater than or equal to K, $\mathrm{M} = \sum_{i=1}^{K} M_i$, $M_i$ is a total quantity of BWPs that are of an i[th] cell in the K cells and that are capable of being indicated by a BWP indicator field, and the BWP indicator field is a field in a DCI used for multi-cell scheduling. Further, the network device further sends a first DCI to the terminal device, where the first DCI is used to schedule data channels in C (where C is a positive integer less than or equal to K) cells, to implement multi-cell scheduling. The first DCI includes the BWP indicator field, the BWP indicator field indicates C BWPs of the C cells, and the C BWPs are in one-to-one correspondence with the C cells. In other words, the BWP indicator field indicates one BWP of each of the C cells.

With reference to the first aspect or the second aspect, in some implementations of the first aspect or the second aspect, the first element sequentially indicates, in ascending order of BWP identities of the $M_i$ BWPs of the i[th] cell, time domain resource allocation information of the $M_i$ BWPs.

With reference to the first aspect or the second aspect, in some implementations of the first aspect or the second aspect, $N_i$ BWPs are configured for the i[th] cell, and $N_i$ is an integer greater than $M_i$.

With reference to the first aspect or the second aspect, in some implementations of the first aspect or the second aspect, assuming that four dedicated BWPs, in addition to an initial BWP, are configured for the first cell in the C cells, different values of the BWP indicator field indicate the four dedicated BWPs, and the different values of the BWP indicator field are in one-to-one correspondence with the four dedicated BWPs.

With reference to the first aspect or the second aspect, in some implementations of the first aspect or the second aspect, assuming that three dedicated BWPs, in addition to the initial BWP, are configured for the second cell in the C cells, different values of the BWP indicator field indicate the initial BWP and the three dedicated BWPs, and the different values of the BWP indicator field are in one-to-one correspondence with the initial BWP and the three dedicated BWPs.

According to a third aspect, a time domain resource indication method is provided. The method may be performed by a terminal device, or may be performed by a component (for example, a chip, a circuit, or a chip system) of the terminal device. For ease of understanding, the following uses an example in which the method is performed by the terminal device for description.

The time domain resource indication method includes: The terminal device receives second configuration information from a network device, where the second configuration information indicates a second time domain resource

allocation list. Specifically, the second time domain resource allocation list includes at least one element, the at least one element includes a second element, the second element indicates time domain resource allocation information (for example, time domain resource allocation indexes) of M BWPs of K cells, K and M are positive integers, M is greater than or equal to K, $M = \sum_{i=1}^{K} M_i$, $M_i$ is a total quantity of BWPs configured for an i^th cell in the K cells, $M_i$ is a positive integer, and i is an integer less than or equal to K. Further, the terminal device further receives a second DCI from the network device, where the second DCI is used to schedule data channels in C (where C is a positive integer less than or equal to K) cells, to implement multi-cell scheduling. The second DCI includes a BWP indicator field, the BWP indicator field indicates C BWPs of the C cells, and the C BWPs are in one-to-one correspondence with the C cells. In other words, the BWP indicator field indicates one BWP of each of the C cells.

Based on the foregoing technical solution, time domain resource allocation information corresponding to each BWP configured for each of the K cells may be determined based on the second time domain resource allocation list configured by the network device. Therefore, a case in which time domain resource allocation information of some BWPs is not available can be avoided. In this way, efficiency of indicating a time domain resource of a data channel is improved in a scenario in which multi-cell scheduling is implemented by using a single DCI.

With reference to the third aspect, in some implementations of the third aspect, the second DCI further includes a time domain resource allocation field, a scheduled cell set indicator field, and a scheduled cell indicator field, the time domain resource allocation field indicates the second element, the scheduled cell set indicator field indicates a second cell set, and the scheduled cell indicator field indicates the C cells in the second cell set. The method further includes: The terminal device determines, based on the second element, time domain resource allocation information respectively corresponding to the C BWPs of the C cells.

With reference to the third aspect, in some implementations of the third aspect, when a quantity of BWPs configured for a first cell in the C cells is less than or equal to 2, the method further includes: determining a first BWP of the first cell based on a value of a least significant bit in the BWP indicator field.

With reference to the third aspect, in some implementations of the third aspect, when a BWP that is of a first cell in the C cells and that is indicated by the BWP indicator field is a BWP that is not configured for the first cell, or when a BWP that is of a first cell and that is indicated by the BWP indicator field is a BWP in a dormant state, the method further includes: determining not to receive or send data in the first cell; or determining to use an active BWP to perform data transmission in the first cell.

According to a fourth aspect, a time domain resource indication method is provided. The method may be performed by a network device, or may be performed by a component (for example, a chip, a circuit, or a chip system) of the network device. For ease of understanding, the following uses an example in which the method is performed by a terminal device for description.

The time domain resource indication method includes: The network device sends second configuration information to the terminal device, where the second configuration information indicates a second time domain resource allocation list. Specifically, the second time domain resource allocation list includes at least one element, the at least one element includes a second element, the second element indicates time domain resource allocation information (for example, time domain resource allocation indexes) of M BWPs of K cells, K and M are positive integers, M is greater than or equal to K, $M = \sum_{i=1}^{K} M_i$, $M_i$ is a total quantity of BWPs configured for an i^th cell in the K cells, $M_i$ is a positive integer, and i is an integer less than or equal to K. Further, the network device further sends a second DCI to the terminal device, where the second DCI is used to schedule data channels in C (where C is a positive integer less than or equal to K) cells, to implement multi-cell scheduling. A first DCI includes a BWP indicator field, the BWP indicator field indicates C BWPs of the C cells, and the C BWPs are in one-to-one correspondence with the C cells. In other words, the BWP indicator field indicates one BWP of each of the C cells.

With reference to the third aspect or the fourth aspect, in some implementations of the third aspect or the fourth aspect, the second element sequentially indicates, in ascending order of BWP identities of the $M_i$ BWPs of the i^th cell, time domain resource allocation information of the $M_i$ BWPs.

According to a fifth aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a communication unit.

In an implementation, the apparatus is the terminal device or the network device. When the apparatus is the terminal device or the network device, the communication unit may be a transceiver, or an input/output interface, or a communication interface; and the processing unit may be at least one processor. Optionally, the transceiver is a transceiver circuit. Optionally, the input/output interface is an input/output circuit.

In another implementation, the apparatus is a chip, a chip system, or a circuit used in the terminal device or the network device. When the apparatus is the chip, the chip system, or the circuit used in the terminal device or the network

device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a sixth aspect, a communication method is provided. The method may be performed by a terminal device, or may be performed by a component (for example, a chip, a circuit, or a chip system) of the terminal device. For ease of understanding, the following uses an example in which the method is performed by the terminal device for description.

The communication method includes: The terminal device receives third configuration information from a network device, where the third configuration information indicates a scheduled cell list. Specifically, the scheduled cell list includes at least one element, the at least one element includes a third element, and the third element indicates a cell scheduled by using a DCI used for multi-cell scheduling. Further, the terminal device further receives a third DCI from the network device, where the third DCI is used to schedule data channels in C (where C is an integer greater than or equal to 1) cells, to implement multi-cell scheduling. The third DCI includes a scheduled cell indicator field and a frequency domain resource allocation field. The scheduled cell indicator field indicates the C cells, and the C cells are cells indicated by the third element in the scheduled cell list. The frequency domain resource allocation field indicates frequency domain information corresponding to each of the C cells. The terminal device determines, based on the frequency domain information corresponding to each of the C cells, a cell that is in the C cells and that cannot be scheduled by using the third DCI.

Based on the foregoing technical solution, in a scenario in which multi-cell scheduling is implemented by using a single DCI, the terminal device may determine, based on values of frequency domain resource allocation fields that correspond to different cells and that are carried in the single DCI, whether a cell is scheduled. Therefore, without increasing a size (size) of the single DCI, the terminal device determines, by parsing a frequency domain resource allocation field in the single DCI, a cell that cannot be scheduled and that is in a plurality of cells scheduled by using the single DCI, to avoid invalid scheduling when there is no frequency domain resource for a cell, thereby improving flexibility of implementing multi-cell scheduling by using the single DCI.

With reference to the sixth aspect, in some implementations of the sixth aspect, that the terminal device determines, based on the frequency domain information corresponding to each of the C cells, the cell that is in the C cells and that cannot be scheduled by using the third DCI includes:
The terminal device determines, when a frequency domain resource allocation manner corresponding to a third cell in the C cells is a type 0, and all bits in a frequency domain resource allocation field corresponding to the third cell are set to 0, that the third cell cannot be scheduled by using the third DCI; or

the terminal device determines, when a frequency domain resource allocation manner corresponding to a third cell in the C cells is a type 1, and all bits in a frequency domain resource allocation field corresponding to the third cell are set to 1, that the third cell cannot be scheduled by using the third DCI; or

the terminal device determines, when a frequency domain resource allocation manner corresponding to a third cell in the C cells is a resource allocation manner featuring dynamic switching, and all bits in a frequency domain resource allocation field corresponding to the third cell are set to 1 or 0, that the third cell cannot be scheduled by using the third DCI.

Based on the foregoing technical solution, the terminal device may determine, in different manners, a cell that cannot be scheduled and that is in the C cells, thereby improving flexibility of the solution.

According to a seventh aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a terminal device or a network device.

In another implementation, the apparatus is a chip, a chip system, or a circuit used in the terminal device or the network device.

According to an eighth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a ninth aspect, a processor is provided. The processor is configured to perform the methods provided in the foregoing aspects.

Operations such as sending and obtaining/receiving related to the processor, unless otherwise specified or

provided that the operations do not contradict actual functions or internal logic of the operations in related descriptions, may be understood as operations such as outputting and receiving, or inputting performed by the processor, or may be understood as sending and receiving operations performed by a radio frequency circuit and an antenna. This is not limited in this application.

According to a tenth aspect, a computer-readable storage medium is provided. The computer-readable medium stores program code to be executed by a device, and the program code is used to perform the method provided in any one of the foregoing aspects or the implementations of the foregoing aspects.

According to an eleventh aspect, a computer program product including instructions is provided. When the computer program product runs on a computer, the computer is caused to perform the method provided in any one of the foregoing aspects or the implementations of the foregoing aspects.

According to a twelfth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that implement the method in this application is not specifically limited in this application. For example, the method may be performed by one chip, or may be performed by two or more chips. In addition, when there are two or more chips that implement the method in this application, a chip manufacturer is not limited. The chips may be from a same manufacturer or from different manufacturers.

According to a thirteenth aspect, a computer program is provided. When the computer program is run on a computer, the method provided in any one of the foregoing aspects or the implementations of the foregoing aspects is performed.

According to a fourteenth aspect, a communication system is provided. The communication system includes the terminal device and the network device described above.

## BRIEF DESCRIPTION OF DRAWINGS

FIG. 1 is a diagram of an architecture of a communication system 1000 to which an embodiment of this application is applied;
FIG. 2 is a diagram of carrier aggregation;
FIG. 3 is a diagram of a self-carrier scheduling manner;
FIG. 4 is a diagram of a cross-carrier scheduling manner;
FIG. 5 is a diagram of BWPs included in a carrier;
FIG. 6 is a diagram of multi-cell scheduling;
FIG. 7 is a schematic flowchart of a time domain resource indication method according to an embodiment of this application;
FIG. 8 is a schematic flowchart of another time domain resource indication method according to an embodiment of this application;
FIG. 9 is a schematic flowchart of a communication method according to an embodiment of this application;
FIG. 10 is a diagram of a communication apparatus according to an embodiment of this application; and
FIG. 11 is a diagram of another communication apparatus according to an embodiment of this application.

## DESCRIPTION OF EMBODIMENTS

The following describes technical solutions of this application with reference to the accompanying drawings.

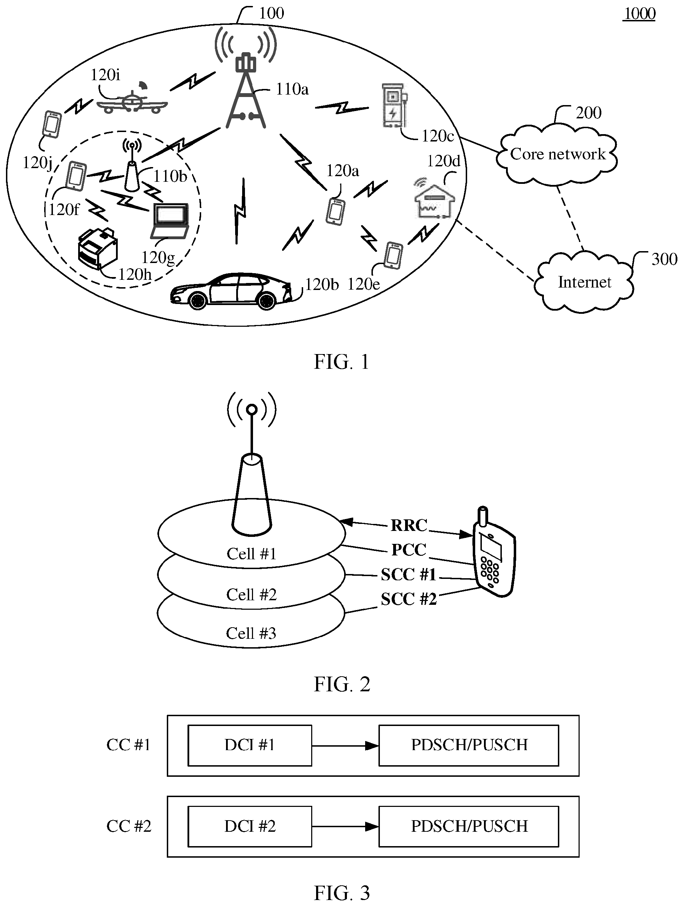

FIG. 1 is a diagram of an architecture of a communication system 1000 to which an embodiment of this application is applied. As shown in FIG. 1, the communication system includes a radio access network 100 and a core network 200. Optionally, the communication system 1000 may further include the Internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different physical devices that are independent of each

other, or a function of the core network device and a logical function of the radio access network device may be integrated into a same physical device, or some functions of the core network device and some functions of the radio access network device may be integrated into one physical device. Terminals may be connected to each other in a wired or wireless manner, and radio access network devices may be connected to each other in a wired or wireless manner. FIG. 1 is merely a diagram. The communication system may further include another network device, for example, may further include a wireless relay device and a wireless backhaul device, which are not shown in FIG. 1.

The radio access network device is an access device through which the terminal accesses the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, or the like; or may be a module or a unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to related technical specifications in the 3rd generation partnership project (3rd generation partnership project, 3GPP).

In different systems, the CU (or a CU-CP and a CU-UP), the DU, or an RU may also have different names, but a person skilled in the art may understand meanings thereof. For example, the radio access network may alternatively be of an open radio access network (open radio access network, O-RAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the radio access network device is referred to as a network device for short, and the base station is used as an example of the radio access network device.

The terminal is a device that has a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a mechanical arm, a smart home device, or the like. A specific technology and a specific device form that are used by the terminal are not limited in embodiments of this application.

The base station and the terminal may be at fixed locations, or may be movable. The base station and the terminal may be deployed on the land, including an indoor device, an outdoor device, a handheld device, or a vehicle-mounted device; or may be deployed on a water surface; or may be deployed on an airplane, a balloon, or an artificial satellite. Application scenarios of the base station and the terminal are not limited in embodiments of this application.

A role of the base station and a role of the terminal may be relative to each other. For example, a helicopter or an uncrewed aerial vehicle 120i in FIG. 1 may be configured as a mobile base station. For those terminals 120j that access the radio access network 100 through 120i, the terminal 120i is a base station. However, for the base station 110a, 120i is a terminal, that is, 110a and 120i communicate with each other according to a radio air interface protocol. Certainly, 110a and 120i may alternatively communicate with each other according to an interface protocol between base stations. In this case, for 110a, 120i is also a base station. Therefore, both the base station and the terminal may be collectively referred to as communication apparatuses. 110a and 110b in FIG. 1 may be referred to as communication apparatuses functioning as the base station, and 120a to 120j in FIG. 1 may be referred to as communication apparatuses functioning as the terminal.

Communication between the base station and the terminal, communication between the base stations, and communication between the terminals may be performed by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as the smart grid, the industrial control, the smart transportation, and the smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. To communicate with the base station, the terminal needs to establish a wireless connection to a cell controlled by the base station. The cell to which the terminal establishes the wireless connection is referred to as a serving cell of the terminal. When communicating with the serving cell, the terminal is further interfered with by a signal from a neighboring cell.

In this specification, the PDSCH, the physical downlink control channel (physical downlink control channel, PDCCH), and the physical uplink shared channel (physical uplink shared channel, PUSCH) are merely respectively used as an example of a downlink data channel, a downlink control channel, and an uplink data channel. In different systems and different scenarios, the data channel and the control channel may have different names. This is not limited in embodiments of this application.

For ease of understanding of embodiments of this application, some basic concepts in this application are briefly described.

1. A cell is a group of resources managed by a base station, and includes frequency domain resources and space domain resource. The frequency domain resources of the cell include an uplink frequency domain resource and/or a downlink frequency domain resource. The space domain resources of the cell may be space domain resources corresponding to one beam or one group of beams, which may also be understood as that one cell corresponds to one specific physical coverage area. In embodiments of this application, different cells may be managed by different base stations. For example, a cell #1 and a cell #2 may be managed by different base stations. In this case, it may be considered that the cell #1 and the cell #2 do not belong to a same station. The cell #1 and the cell #2 may alternatively be managed by a same base station, and have a same baseband processing unit and/or a same radio frequency processing unit. This is not limited in this application.
It should be noted that, cells and carriers are in one-to-one correspondence, and the cells and the carriers may be used interchangeably. In other words, a frequency band range of a cell may be understood as a frequency band range in which a frequency of the carrier corresponding to the cell falls, and may also be referred to as an operating frequency band of the cell, a frequency band of the cell, or the like.

2. Carrier aggregation (carrier aggregation, CA) means that two or more component carriers (component carriers, CCs) are aggregated to support a larger transmission bandwidth. A CA technology in NR is used to increase a transmission bandwidth for a single user. Specifically, in the carrier aggregation technology, integration can be performed on multi-frequency resources. For example, spectrum resources in a same frequency band or different frequency bands can be aggregated by using the CA technology, for use by a terminal, to improve resource utilization for an entire network and improve user experience.
For ease of understanding, the CA technology is briefly described with reference to FIG. 2. It can be learned from FIG. 2 that a component carrier corresponding to a cell #1, a component carrier corresponding to a cell #2, and a component carrier corresponding to a cell #3 are aggregated to provide a service for a terminal, where the cell #1 is a primary cell (primary cell, PCell), and the cell #2 and the cell #3 are secondary cells (secondary cells, SCells). The PCell is a cell in which the terminal establishes an initial connection, or a cell in which the terminal reestablishes a radio resource control (radio resource control, RRC) connection. The PCell is responsible for RRC communication with the terminal. A component carrier corresponding to the PCell is referred to as a primary component carrier (primary component carrier, PCC) (for example, a PCC shown in FIG. 2). A downlink carrier of the PCell is referred to as a DL PCC, and an uplink carrier of the PCell is referred to as a UL PCC. The SCell is added during RRC reconfiguration, and is used to provide an additional radio resource. There is no RRC communication between the SCell and UE. A component carrier corresponding to the SCell is referred to as a secondary component carrier (secondary component carrier, SCC) (for example, an SCC #1 and an SCC #2 shown in FIG. 2). A downlink carrier of the SCell is referred to as a DL SCC, and an uplink carrier of the SCell is referred to as a UL SCC.

3. Downlink control information (downlink control information, DCI): A network device sends the DCI to a terminal device through the PDCCH. The downlink control information includes scheduling information of a data channel, and the network device and the terminal device perform data transmission based on the scheduling information through the data channel.

For example, the downlink control information includes but is not limited to: control information related to bearer

data transmission (for example, resource allocation information for data transmission, and format information of an uplink/downlink resource in a slot), power control information of a data channel and a signal, dynamic slot configuration information, and resource preemption information. After detecting the control information, the terminal may send and receive data or perform a corresponding operation based on the control information.

Optionally, if the network device expects to schedule, on a plurality of carriers, PDSCH or PUSCH transmissions that are simultaneously performed by the terminal, the network device needs to send a plurality of DCIs for scheduling, and each carrier needs one DCI for scheduling. Based on a carrier on which the DCI is sent, scheduling is performed in two manners: self-carrier scheduling and cross-carrier scheduling.

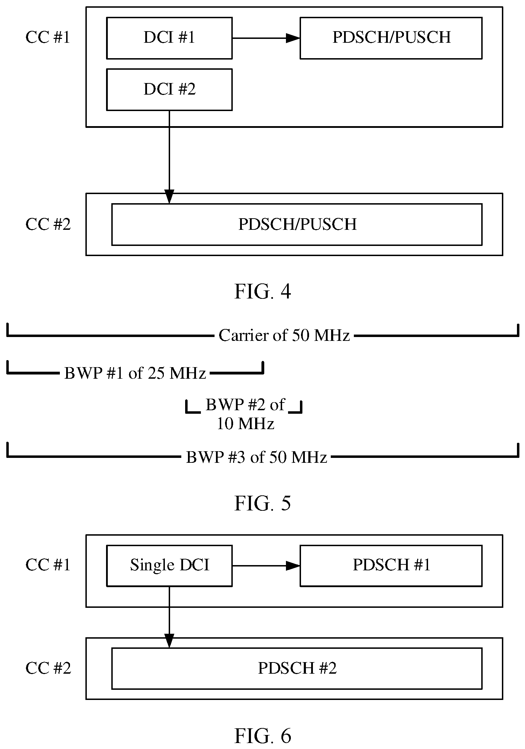

For ease of understanding, carrier scheduling manners are briefly described with reference to FIG. 3 and FIG. 4. FIG. 3 shows that when the self-carrier scheduling manner is used, a DCI for scheduling PDSCH or PUSCH transmission on one carrier is also sent on the carrier. As shown in FIG. 3, a DCI #1 for scheduling PDSCH or PUSCH transmission on a CC #1 is sent on the CC #1, and a DCI #2 for scheduling PDSCH or PUSCH transmission on a CC #2 is sent on the CC #2. FIG. 4 shows that when the cross-carrier scheduling manner is used, a DCI for scheduling PDSCH or PUSCH transmission on one carrier may be sent on another carrier, so that the DCI is sent on only one carrier. As shown in FIG. 4, a DCI #1 for scheduling PDSCH or PUSCH transmission on a CC #1 is sent on the CC #1, and a DCI #2 for scheduling PDSCH or PUSCH transmission on a CC #2 is also sent on the CC #1.

4. Bandwidth part (bandwidth part, BWP): One BWP is a segment of continuous frequency resources on one carrier. There may be one or more BWPs on one carrier, and a bandwidth of a BWP on one carrier is less than or equal to a bandwidth of the carrier. After a BWP is configured and activated, the BWP is referred to as an active BWP.

For example, for one terminal, there is one active downlink BWP (active downlink BWP) on one downlink carrier, and there is one active uplink BWP (active uplink BWP) on one uplink carrier. Generally, data and control information that are sent in an uplink by the terminal are sent within the active uplink BWP, and downlink data and control information are received within the active downlink BWP.

For ease of understanding, a form in which one carrier includes BWPs is briefly described with reference to FIG. 5. It can be learned from FIG. 5 that one carrier of 50 MHz is configured with three BWPs, which are respectively a BWP #1, a BWP #2, and a BWP #3. A bandwidth of the BWP #1 is 25 MHz, a bandwidth of the BWP #2 is 10 MHz, and a bandwidth of the BWP #3 is 50 MHz. The active BWP may be the BWP #2.

5. BWP identity (identity, ID): A maximum of four UE-dedicated BWPs (UE-dedicated BWPs) can be configured for one terminal, where the UE-dedicated BWP is a BWP configured by using UE-specific RRC signaling. In addition, the terminal is further configured with an initial downlink BWP (Initial DL BWP) and an initial uplink BWP (Initial UL BWP). Therefore, one terminal may have five BWPs configured by using higher layer signaling in an uplink and five BWPs configured by using higher layer signaling in a downlink. Neither of the initial DL BWP and the initial UL BWP is a UE-dedicated BWP configured by using RRC dedicated signaling. A maximum of four UE-dedicated BWPs can be configured by using RRC dedicated signaling in the uplink and a maximum of four UE-dedicated BWPs can be configured by using RRC dedicated signaling in the downlink.

A value of the BWP identity (BWP ID) is [0, 1, ..., 4], that is, five BWP numbers are supported. BWP ID = 0 indicates the initial DL BWP or the initial UL BWP, and BWP IDs = 1 to 4 indicate four UE-dedicated BWPs configured by using RRC signaling.

6. BWP indicator (Indicator): A 2-bit BWP indicator is used for a DCI, to indicate different BWPs. If a BWP is configured by using RRC signaling in an uplink or a downlink, a BWP indicator field in the DCI exists. If a BWP is not configured by using RRC signaling, an available BWP is an initial BWP, and in this case, a length of the BWP indicator is 0. If a BWP is configured by using RRC signaling in the uplink or the downlink, and if scheduling is performed in a current active BWP, a BWP ID of the current active BWP needs to be filled in the BWP indicator.

As described above, a length of the BWP indicator in the DCI is 2 bits, and the 2-bit BWP indicator cannot arbitrarily indicate any one of five BWPs. Optionally, when a quantity of configured UE-dedicated BWPs is not greater than 3, scheduling of the initial BWP can be indicated. UE needs to determine, based on a quantity of UE-dedicated BWPs configured in the RRC signaling, which one of the following two correspondences is to be used.

A correspondence is as follows: When the quantity of UE-dedicated BWPs is less than or equal to 3, a correspondence between a BWP indicator and a BWP ID is shown in the following Table 1.

Table 1

| Type | BWP ID | BWP indicator |
|---|---|---|
| Initial BWP | 0 | 00 |
| UE-dedicated BWP 1 | 1 | 01 |
| UE-dedicated BWP 2 | 2 | 10 |

(continued)

| Type | BWP ID | BWP indicator |
|---|---|---|
| UE-dedicated BWP 3 | 3 | 11 |

The other correspondence is as follows: When the quantity of UE-dedicated BWPs is equal to 4, a correspondence between a BWP indicator and a BWP ID is shown in the following Table 2.

Table 2

| Type | BWP ID | BWP indicator |
|---|---|---|
| UE-dedicated BWP 1 | 1 | 00 |
| UE-dedicated BWP 2 | 2 | 01 |
| UE-dedicated BWP 3 | 3 | 10 |
| UE-dedicated BWP 4 | 4 | 11 |

7. Time domain resource allocation (time domain resource allocation, TDRA): To receive a PDSCH, a terminal first decodes a PDCCH. A DCI carried in the PDCCH specifies how to transmit the PDSCH on an air interface, and the DCI indicates, based on a TDRA field, information about a time domain resource occupied by the PDSCH.

For example, a network device configures a corresponding TDRA table for each PDSCH by using RRC signaling. Configuration is performed at a granularity of each PDSCH/PUSCH on each BWP of each CC. Each row corresponds to a different TDRA configuration. Specific information about a time domain resource includes a mapping type (Mapping Type), start and length indicator value (Start and length indicator value, SLIV) information, and k0 information. The mapping type includes two types: Type-A and Type-B, the SLIV information indicates a start symbol location and a symbol length of the PDSCH in one slot (slot), and the k0 information indicates a slot interval between a PDCCH and a corresponding scheduled PDSCH.

Optionally, for a DCI for scheduling a single carrier, a TDRA table configuration manner is shown in the following Table 3.

Table 3

| Index | k0 | SLIV | Mapping Type |
|---|---|---|---|
| 0 | 2 | $SLIV_1$ | Type-A |
| 1 | 0 | $SLIV_2$ | Type-A |
| 2 | 1 | $SLIV_3$ | Type-B |
| ... | ... | ... | ... |

The DCI mainly indicates index information in the TDRA table, to indicate time domain information corresponding to a currently transmitted PDSCH. For example, the DCI indicates a configuration of an index of 2 in the TDRA table.

8. Multi-cell scheduling: Information in a plurality of DCIs is combined, so that a single DCI (single DCI) may be used to simultaneously schedule a plurality of PDSCHs/PUSCHs on a plurality of carriers, which is referred to as multi-carrier scheduling (also referred to as multi-cell scheduling). Carriers scheduled by using a same single DCI belong to a same co-scheduled cell set.

For ease of understanding, a multi-cell scheduling technology is briefly described with reference to FIG. 6. It can be learned from FIG. 6 that transmission of a PDSCH #1 on a CC #1 and transmission of a PDSCH #2 on a CC #2 are scheduled by using a same DCI (for example, a single DCI shown in FIG. 6).

With reference to FIG. 1, the foregoing briefly describes a scenario to which a time domain resource indication method provided in embodiments of this application can be applied, describes basic concepts that may be involved in embodiments of this application, and describes TDRA and multi-cell scheduling in the basic concepts. For a single DCI, time domain resource information of corresponding PDSCHs on different CCs is also indicated by pre-configuring a TDRA table.

For example, the network device configures a joint TDRA table by using RRC signaling. Each row in the joint TDRA table corresponds to time domain resource information of a corresponding PDSCH on each BWP of each CC. Considering that a single DCI supports scheduling of a maximum of four BWPs, and a column quantity of the joint TDRA

table ranges from 2 to 16, a maximum of 32 rows are supported in a downlink TDRA table, and a maximum of 64 rows are supported in an uplink TDRA table. Configuration of a joint TDRA table is shown in the following Table 4.

Table 4

| **Index** | Cell 1 | | | | Cell 2 | | | | Cell 3 | | | | Cell 4 | | | |
|---|---|---|---|---|---|---|---|---|---|---|---|---|---|---|---|---|
| | BWP 0 | BWP 1 | BWP 2 | BWP 3 | BWP 0 | BWP 1 | BWP 2 | BWP 3 | BWP 0 | BWP 1 | BWP 2 | BWP 3 | BWP 0 | BWP 1 | BWP 2 | BWP 3 |
| **0** | 3 | 2 | 1 | 5 | 3 | 2 | 4 | 1 | 0 | 2 | 4 | 7 | 3 | 2 | 6 | 8 |
| **1** | 3 | 1 | 1 | 5 | 2 | 2 | 4 | 1 | 0 | 3 | 4 | 7 | 3 | 2 | 5 | 2 |
| **2** | ... | ... | ... | ... | ... | ... | ... | ... | ... | ... | ... | ... | ... | ... | ... | ... |
| **...** | ... | ... | ... | ... | ... | ... | ... | ... | ... | ... | ... | ... | ... | ... | ... | ... |

In the foregoing joint TDRA table, a value filled in a corresponding row or a corresponding column is called a TDRA index value. The value is associated with a specific row in the TDRA table corresponding to a single cell scheduled by using a single DCI. Time domain resource information of a PDSCH in a current cell is determined based on the row. For example, the DCI indicates a 1st row (where each row may be referred to as an entry) in Table 4. If a BWP indicator field in a current single DCI indicates that the cell 1 is currently scheduled for transmission on the BWP 1, and a corresponding TDRA index value is 1, information in a 1st row in a TDRA table (for example, Table 3) of the single cell is further indexed, and the information is time domain resource information corresponding to a currently scheduled PDSCH in the cell 1.

In the TDRA table configuration method, a joint TDRA table corresponding to a single DCI has only a maximum of 16 columns, and a first column of each cell corresponds to configuration of the BWP 0. However, when a base station configures four pieces of UE dedicated BWP information in addition to an initial BWP (BWP 0) in each cell, time domain resource information of the BWP 4 cannot be indicated. In addition, when the base station configures four pieces of UE dedicated BWP information in addition to the initial BWP (BWP 0) in each cell, the BWP indicator cannot indicate scheduling information of the BWP #0. Therefore, information corresponding to the corresponding BWP #0 does not need to be configured in the table, and the time domain resource information is redundant at this moment.

To resolve a problem in the foregoing TDRA table configuration method, this application provides a time domain resource indication method, to configure a joint TDRA table so that UE can obtain complete time domain resource information in a scenario in which multi-cell scheduling is implemented by using a single DCI.

It should be understood that, the time domain resource indication method provided in embodiments of this application may be applied to a system in which communication is performed by using a multi-antenna technology, for example, the communication system 1000 shown in FIG. 1. The communication system may include at least one network device and at least one terminal device. Communication between the network device and the terminal device may be performed by using the multi-antenna technology.

It should further be understood that a specific structure of an execution body of the method provided in embodiments of this application is not specifically limited in embodiments shown below, provided that a program that records code for the method provided in embodiments of this application can be run to perform communication according to the method provided in embodiments of this application. For example, the execution body of the method provided in embodiments of this application may be a terminal device or a network device, or may be a functional module that is in the terminal device or the network device and that can invoke and execute the program.

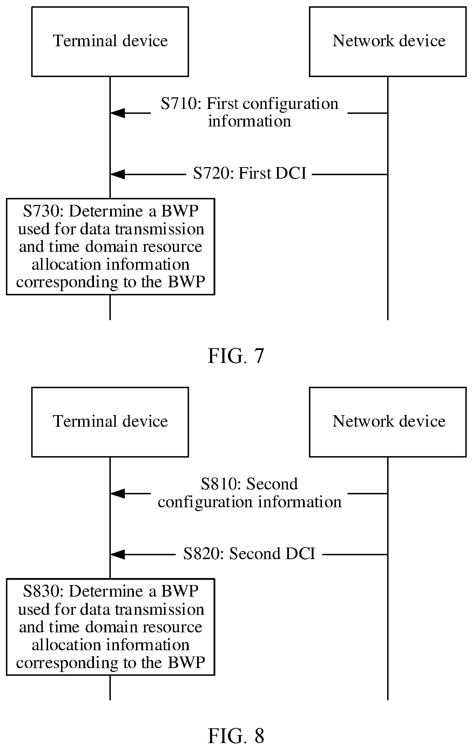

FIG. 7 is a schematic flowchart of a time domain resource indication method according to this application. The method includes the following step:

S710: A network device sends first configuration information to a terminal device. Correspondingly, the terminal device receives the first configuration information from the network device.

Specifically, the first configuration information indicates a first time domain resource allocation list, the first time domain resource allocation list includes at least one element, the at least one element includes a first element, the first element indicates time domain resource allocation information of M BWPs of K cells, K and M are positive integers, M is greater than or equal to K, $\mathrm{M} = \sum_{i=1}^{K} M_i$ , $M_i$ is a total quantity of BWPs that are of an i$^{th}$ cell in the K cells and that are capable of being indicated by a BWP indicator field, the BWP indicator field is a field in a DCI used for multi-cell scheduling, $M_i$ is a positive integer, and i is a positive integer less than or equal to K.

Optionally, each element in the first time domain resource allocation list may indicate the time domain resource allocation information of the M BWPs of the K cells, and the first element may be any one of the at least one element. The K cells may be K carriers. Unless logically conflicted, the cell and the carrier in this application may be replaced with each other for description.

For example, the first time domain resource allocation list in this embodiment may be understood as a TDRA table, or may be referred to as a sequence or an array. When the first time domain resource allocation list is referred to as a TDRA table, an element in the first time domain resource allocation list may also be referred to as a row in the TDRA table.

For example, in this embodiment, the time domain resource allocation information that is of the M BWPs of the K cells and that is indicated by the first element may be understood as that the first element indicates time domain resource allocation indexes of the M BWPs of the K cells. For example, the first time domain resource allocation list is the TDRA table, the first element may be a row in the TDRA table, and a row in the TDRA table indicates a time domain resource allocation index of a corresponding BWP.

By way of example and not limitation, in this embodiment, the network device may send the first time domain resource allocation list to the terminal device by using higher layer signaling (for example, RRC signaling). Alternatively, the network device may send the first time domain resource allocation list to the terminal device in another manner, for example, provide the first time domain resource allocation list for the terminal device through a notification procedure or a subscription procedure. Optionally, the first time domain resource allocation list may alternatively be predefined according to a protocol.

Further, the network device may schedule C cells in the K cells by using a first DCI. In this case, the method

procedure shown in FIG. 7 further includes the following step:

S720: The network device sends the first DCI to the terminal device. Correspondingly, the terminal device receives the first DCI from the network device.

Specifically, the first DCI is used to schedule data channels in the C cells in the K cells, and C is a positive integer less than or equal to K (where for example, a value of C may be 2, 3, or 4), to implement multi-cell scheduling. The first DCI includes a BWP indicator field, the BWP indicator field indicates C BWPs of the C cells, and the C BWPs are in one-to-one correspondence with the C cells. In other words, the BWP indicator field indicates one BWP of each of the C cells.

Optionally, a bit width of the BWP indicator field may be 1 bit or 2 bits. The bit width of the BWP indicator field is determined by a quantity of BWPs of a cell that is in the C cells and that is configured with a largest quantity of BWPs. For example, if C is equal to 2, the C cells include a cell #1 and a cell #2, BWPs configured for the cell #1 include a BWP #0 and a BWP #1, and BWPs configured for the cell #2 include the BWP #0, the BWP #1, a BWP #2, and a BWP #3, the bit width of the BWP indicator field is determined by the four BWPs configured for the cell #2, that is, it may be determined that the bit width of the BWP indicator field is 2 bits. For another example, the C cells include a cell #1 and a cell #2, BWPs configured for the cell #1 include a BWP #0, a BWP #1, a BWP #2, a BWP #3, and a BWP #4, and BWPs configured for the cell #2 include a BWP #0, a BWP #1, a BWP #2, a BWP #3, and a BWP #4. When a value of the BWP indicator field is "11", the BWP indicator field indicates the BWP #4 configured for the cell #1 and the BWP #4 configured for the cell #2. In other words, the BWP indicator field indicates two BWPs of the two cells, and the two BWPs are in one-to-one correspondence with the two cells.

Optionally, the first DCI may further include a time domain resource allocation field, indicating an element (for example, the first element) in the first time domain resource allocation list. The first DCI may further include a scheduled cell set indicator field and a scheduled cell indicator field, the scheduled cell set indicator field indicates a first cell set, and the scheduled cell indicator field indicates the C cells in the first cell set.

A quantity M of BWPs that are of the K cells and that are indicated by the first time domain resource allocation list configured by the network device for the terminal device satisfies the following relationship: $\mathrm{M} = \sum_{i=1}^{K} M_i$, where $M_i$ is the total quantity of BWPs that are of the i[th] cell in the K cells and that are capable of being indicated by the BWP indicator field. In addition, BWPs that are of a plurality of cells and that are capable of being indicated by different values of the BWP indicator field carried in the first DCI are the M BWPs. In other words, time domain resource allocation information corresponding to each BWP that is capable of being indicated by the BWP indicator field in the first DCI may be determined based on the first time domain resource allocation list configured by the network device. Therefore, a case in which time domain resource allocation information of some BWPs indicated by the BWP indicator field is not available can be avoided. In addition, a case in which a BWP indicated by an element in the first time domain resource allocation list cannot be indicated by using the BWP is avoided, so that redundancy in the time domain resource allocation information is not caused, thereby avoiding an increase in signaling overheads. In this way, efficiency of indicating a time domain resource of a data channel is improved in a scenario in which multi-cell scheduling is implemented by using a single DCI.

It can be learned from the foregoing that the first element indicates the time domain resource allocation information of the M BWPs of the K cells. By way of example and not limitation, the first element may sequentially indicate, in ascending order of BWP identities of the $M_i$ BWPs of the i[th] cell, time domain resource allocation information of the $M_i$ BWPs.

For example, if a total quantity of BWPs that are of the i[th] cell in the K cells and that are capable of being indicated by different values of the BWP indicator field is 4, and BWP identities of the four BWPs are a BWP #1, a BWP #2, a BWP #3, and a BWP #4, the first element may sequentially indicate time domain resource allocation information of the BWP #1, the BWP #2, the BWP #3, and the BWP #4 in a sequence of the BWP #1, the BWP #2, the BWP #3, and the BWP #4.

In addition, it should be noted that in this embodiment, a quantity of BWPs configured for the i[th] cell in the K cells may be greater than the total quantity of BWPs that are of the i[th] cell and that are capable of being indicated by the different values of the BWP indicator field. For example, $N_i$ BWPs are configured for the i[th] cell, and $N_i$ is an integer greater than $M_i$. For example, an initial BWP (for example, a BWP #0) and four dedicated BWPs (for example, a BWP #1, a BWP #2, a BWP #3, and a BWP #4) are configured for the i[th] cell, the four dedicated BWPs may be indicated by different values of the BWP indicator field (where for example, a value "00" of the BWP indicator field indicates the BWP #1, a value "01" of the BWP indicator field indicates the BWP #2, a value "10" of the BWP indicator field indicates the BWP #3, and a value "11" of the BWP indicator field indicates the BWP #4), and the BWP #0 cannot be indicated by the BWP indicator field. Therefore, the quantity (5) of BWPs configured for the i[th] cell is greater than the total quantity (4) of BWPs that are of the i[th] cell and that are capable of being indicated by the different values of the BWP indicator field.

For example, in this embodiment, cases of the BWPs that are of the i[th] cell and that are indicated by different values of the BWP indicator field include but are not limited to the following two possible implementations:

In a possible implementation, assuming that a maximum of four UE-dedicated BWPs (UE-dedicated BWPs) can be configured for one terminal, and four dedicated BWPs, in addition to the initial BWP, are configured for a first cell in the C cells, different values of the BWP indicator field are in one-to-one correspondence with the four dedicated BWPs

configured for the first cell.

In another possible implementation, assuming that a maximum of four UE-dedicated BWPs (UE-dedicated BWPs) can be configured for one terminal, and three dedicated BWPs, in addition to the initial BWP, are configured for a second cell in the C cells, different values of the BWP indicator field are in one-to-one correspondence with the initial BWP and the three dedicated BWPs configured for the first cell.

For ease of understanding, the following describes, with reference to specific examples, a relationship, in this embodiment, between the quantity M of BWPs indicated by the first time domain resource allocation list and the total quantity of BWPs that are of the plurality of cells and that are capable of being indicated by the different values of the BWP indicator field.

Example 1: Four dedicated BWPs, in addition to the initial BWP, are configured for each of the C cells, different values of the BWP indicator field are in one-to-one correspondence with the four dedicated BWPs, and the quantity M of BWPs indicated by the first time domain resource allocation list satisfies the following relationship:

$\mathrm{M} = \sum_{i=1}^{C} 4$ , where 4 is a total quantity of dedicated BWPs and that are of the $i^{th}$ cell and that are indicated by the different values of the BWP indicator field.

For example, a base station configures that there are four cells in a cell set currently scheduled by using the first DCI (that is, a value of C is 4), and four dedicated BWPs (a BWP #1, a BWP #2, a BWP #3, and a BWP #4), in addition to the initial BWP (a BWP #0), are configured for each cell. The first time domain resource allocation list does not include time domain resource allocation information corresponding to initial BWPs of all cells, but includes time domain resource allocation information corresponding to four dedicated BWPs configured for all the cells. When the first time domain resource allocation list is a TDRA table, there are 16 columns in the TDRA table, each of the four cells corresponds to four columns in the TDRA table, and columns corresponding to different cells do not overlap. For the four columns corresponding to each cell, a first column to a last column (or a left-most column to a right-most column) respectively represent time domain resource allocation information corresponding to the four dedicated BWPs whose BWP identities are in ascending order (for example, the BWP #1, the BWP #2, the BWP #3, and the BWP #4).

In other words, four cells are scheduled by using the first DCI, and a total quantity of BWPs configured for each cell is 5 (where for example, four dedicated BWPs, in addition to the initial BWP, are configured for each of the C cells). In this case, 20 columns are required in the TDRA table to reflect time domain resource information of all the BWPs. However, considering that when four dedicated BWPs are configured for each cell, the initial BWP cannot be indicated by the BWP indicator field in the first DCI, the TDRA table may not include information about a BWP #0 of each cell, and the TDRA table includes information about the four dedicated BWPs (a BWP #1, a BWP #2, a BWP #3, and a BWP #4) configured for each cell, so that the TDRA table does not exceed a limitation of 16 columns.

For ease of understanding, the case shown in Example 1 is described with reference to Table 5. A possible form of the first time domain resource allocation list in this embodiment is as follows:

Table 5

| Index | Cell 1 | | | | Cell 2 | | | | Cell 3 | | | | Cell 4 | | | |
|---|---|---|---|---|---|---|---|---|---|---|---|---|---|---|---|---|
| | BWP #1 | BWP #2 | BWP #3 | BWP #4 | BWP #1 | BWP #2 | BWP #3 | BWP #4 | BWP #1 | BWP #2 | BWP #3 | BWP #4 | BWP #1 | BWP #2 | BWP #3 | BWP #4 |
| **0** | 3 | 2 | 1 | 5 | 3 | 2 | 4 | 1 | 0 | 2 | 4 | 7 | 3 | 2 | 6 | 8 |
| **1** | 3 | 1 | 1 | 5 | 2 | 2 | 4 | 1 | 0 | 3 | 4 | 7 | 3 | 2 | 5 | 2 |
| **2** | ... | ... | ... | ... | ... | ... | ... | ... | ... | ... | ... | ... | ... | ... | ... | ... |
| **...** | ... | ... | ... | ... | ... | ... | ... | ... | ... | ... | ... | ... | ... | ... | ... | ... |

Example 2: Three or fewer dedicated BWPs, in addition to the initial BWP, are configured for each of the C cells, different values of the BWP indicator field are in one-to-one correspondence with the initial BWP and the dedicated BWPs, and the quantity M of BWPs indicated by the first time domain resource allocation list satisfies the following relationship: $\mathrm{M} = \sum_{i=1}^{C} X$ , where X is a total quantity of the initial BWP and dedicated BWPs that are of the i$^{th}$ cell and that are indicated by different values of the BWP indicator field, and X is an integer greater than or equal to 1 and less than or equal to 4.

For example, a base station configures that there are four cells in a cell set currently scheduled by using the first DCI (that is, a value of C is 4), and three dedicated BWPs (a BWP #1, a BWP #2, and a BWP #3), in addition to the initial BWP (a BWP #0), are configured for each cell. The first time domain resource allocation list includes time domain resource allocation information corresponding to initial BWPs of all cells and time domain resource allocation information corresponding to three dedicated BWPs configured for all the cells. When the first time domain resource allocation list is a TDRA table, there are 16 columns in the TDRA table, each of the four cells corresponds to four columns in the TDRA table, and columns corresponding to different cells do not overlap. For the four columns corresponding to each cell, a first column to a last column (or a left-most column to a right-most column) respectively represent time domain resource allocation information corresponding to the initial BWP and the three dedicated BWPs whose BWP identities are in ascending order (for example, the BWP #0, the BWP #1, the BWP #2, and the BWP #3).

In other words, four cells are scheduled by using the first DCI, and a total quantity of BWPs configured for each cell is less than 4. In this case, 16 or fewer columns are required in the TDRA table to reflect time domain resource information of all the BWPs. Therefore, the TDRA table may include information about an initial BWP configured for each cell. Refer to Table 4 described above. Details are not described herein again.

It should be understood that the foregoing Example 1 and Example 2 are merely examples for describing possible forms of time domain resource allocation information of M BWPs of the C cells included in the first time domain resource allocation list in this embodiment, and do not constitute any limitation on the protection scope of this application. Another solution in which time domain resource allocation information included in the time domain resource allocation list is set based on a total quantity of BWPs that are of all cells and that are capable of being indicated by different values of a DCI (for example, the first DCI) used for multi-cell scheduling also falls within the protection scope of this application. Examples are not listed herein again.

Further, in this embodiment, after receiving the first configuration information and the first DCI, the terminal device may determine, based on the first DCI and the first configuration information, BWPs used for data transmission in different cells, and time domain resource allocation information corresponding to the BWPs. In this case, the method procedure shown in FIG. 7 further includes the following step:

S730: The terminal device determines a BWP used for data transmission and time domain resource allocation information corresponding to the BWP.

Specifically, the terminal device determines the C BWPs of the C cells based on the BWP indicator field, to determine, based on the first element, time domain resource allocation information respectively corresponding to the C BWPs of the C cells.

In this embodiment, considering that quantities of BWPs configured for different cells may be different, and the BWP indicator field is a shared indicator field for a plurality of cells (where the shared indicator field is a BWP indicator field shared by the plurality of cells, and a value of a bit width (or a quantity of bits) of the BWP indicator field is a bit width of an indicator field corresponding to a cell that is in the C cells and that is configured with a largest quantity of BWPs), when the terminal device parses the BWP indicator field, possible cases may be as follows:

In a possible implementation, when BWPs configured for the first cell in the C cells can be separately indicated by different values of L least significant bits in the BWP indicator field, a first BWP of the first cell is determined based on the values of the L least significant bits in the BWP indicator field, where a value of L is less than the bit width of the BWP indicator field. For example, if the bit width of the BWP indicator field is 2 bits, and only two BWPs are configured for the first cell, the first BWP of the first cell may be determined based on a value of a low-order bit in the BWP indicator field.

In another possible implementation, when a quantity of BWPs configured for the second cell in the C cells is greater than 2, and a quantity of BWPs configured for the first cell in the C cells is less than or equal to 2, the bit width of the BWP indicator field is 2 bits. In this case, a first BWP of the first cell is determined based on a value of a least significant bit in the BWP indicator field.

For example, a BWP #0, a BWP #1, a BWP #2, a BWP #3, and a BWP #4 are configured for a cell 1, the BWP #0 and the BWP #1 are configured for a cell 2, the BWP #0 and the BWP #1 are configured for a cell 3, and the BWP #1, the BWP #2, the BWP #3, and the BWP #4 are configured for a cell 4. In this case, bit widths of indication information required by corresponding BWPs of each cell are respectively 2 bits, 1 bit, 1 bit, and 2 bits. Therefore, a maximum value of the BWP indicator field in the first DCI is 2 bits. When a value of the BWP indicator field is "11", because a quantity of bits of bit widths of indication information required by the cell 2 and the cell 3 is less than a quantity of bits in the BWP indicator field, when determining the BWPs of the cell 2 and the cell 3 based on the BWP indicator field, the terminal device interprets a low-

order bit "1" in the BWP indicator field, to determine that BWPs that are of the cell 2 and the cell 3 and that are currently scheduled are the BWPs #1.

In another possible implementation, a BWP that is of the first cell in the C cells and that is indicated by the BWP indicator field is a BWP that is not configured for the first cell; or a BWP that is of the first cell and that is indicated by the BWP indicator field is a BWP in a dormant state.

In this implementation, the terminal device determines not to receive or send data in the first cell; or the terminal device determines to use an active BWP for data transmission in the first cell. For example, the terminal device determines to perform data transmission by using an active BWP that is used for data transmission in the first cell before the BWP indicator field is received. The data transmission may mean that the network device sends data to the terminal device, or may mean that the terminal device sends data to the network device.

For example, a BWP #0, a BWP #1, a BWP #2, a BWP #3, and a BWP #4 are configured for a cell 1, the BWP #0, the BWP #1, the BWP #2, and the BWP #3 are configured for a cell 2, the BWP #0, the BWP #1, and the BWP #2 are configured for a cell 3, and the BWP #0, the BWP #1, the BWP #2, the BWP #3, and the BWP #4 are configured for a cell 4. In this case, bit widths of indication information required by corresponding BWPs of each cell are respectively 2 bits, 2 bits, 2 bits, and 2 bits. Therefore, a maximum value of the BWP indicator field in the first DCI is 2 bits. When a value of the BWP indicator field is "11", because no information about the BWP #3 is configured for the cell 3, the terminal device may ignore an indication of the BWP indicator field in this case, and perform data transmission in the cell 3 by using a BWP used for data transmission at a previous moment (for example, an active BWP that is most recently used for data transmission in the cell 3; or a current active BWP used for receiving the BWP indicator field). Alternatively, the terminal device may not perform data transmission in the cell 3.

In the time domain resource indication method shown in FIG. 7, in a scenario in which multi-cell scheduling is implemented by using a single DCI, the time domain resource allocation information included in the first time domain resource allocation list configured by the network device for the terminal device includes time domain resource allocation information corresponding to a BWP that is capable of being indicated by the BWP indicator field. Therefore, a case in which time domain resource allocation information of some BWPs indicated by the BWP indicator field is not available can be avoided. In addition, the quantity M of BWPs indicated by the first time domain resource allocation list is not greater than the total quantity of BWPs that are capable of being indicated by the different values of the BWP indicator field, so that redundancy in the time domain resource allocation information is not caused. In this way, efficiency of indicating a time domain resource of a data channel is improved in the scenario in which multi-cell scheduling is implemented by using the single DCI.

This application further provides another time domain resource indication method. Time domain resource allocation information corresponding to each BWP configured for each of C cells is configured, so that a case in which time domain resource allocation information of some BWPs is not available is avoided. The following describes in detail the time domain resource indication method with reference to FIG. 8.

FIG. 8 is a schematic flowchart of another time domain resource indication method according to this application. The method includes the following step:

S810: A network device sends second configuration information to a terminal device. Correspondingly, the terminal device receives the second configuration information from the network device.

Further, the network device may schedule the C cells by using a second DCI, and the method procedure shown in FIG. 8 further includes the following step:

S820: The network device sends the second DCI to the terminal device. Correspondingly, the terminal device receives the second DCI from the network device.

It should be understood that in this embodiment, for a manner in which the network device sends the second configuration information and the second DCI to the terminal device, and definitions of a second time domain resource allocation list and the second DCI, refer to related descriptions in the time domain resource indication method shown in FIG. 7. A difference lies in that a quantity M of BWPs indicated by the second time domain resource allocation list in this embodiment satisfies the following relationship:

$$\mathrm{M} = \sum_{i=1}^{K} M_i,$$

where $M_i$ is a total quantity of BWPs configured for an $i^{th}$ cell in K cells, $M_i$ is a positive integer, and i is an integer less than or equal to K.

In this embodiment, the quantity M of BWPs that are of the K cells and that are indicated by the second time domain resource allocation list configured by the network device for the terminal device is equal to the total quantity of BWPs configured for the K cells. It may be understood that time domain resource allocation information corresponding to each BWP configured for each of the K cells may be determined based on the second time domain resource allocation list

configured by the network device. Therefore, a case in which time domain resource allocation information of some BWPs is not available can be avoided. In this way, efficiency of indicating a time domain resource of a data channel is improved in a scenario in which multi-cell scheduling is implemented by using a single DCI.

It can be learned from the foregoing that a second element indicates time domain resource allocation information of the M BWPs of the K cells. By way of example and not limitation, the second element may sequentially indicate, in ascending order of BWP identities of the $M_i$ BWPs of the i$^{th}$ cell, time domain resource allocation information of the $M_i$ BWPs.

For example, if a total quantity of BWPs that are of an i$^{th}$ cell in the C cells and that are capable of being indicated by different values of the BWP indicator field is 4, and BWP identities of the four BWPs are a BWP #1, a BWP #2, a BWP #3, and a BWP #4, the second element may sequentially indicate time domain resource allocation information of the BWP #1, the BWP #2, the BWP #3, and the BWP #4 in a sequence of the BWP #1, the BWP #2, the BWP #3, and the BWP #4.

In addition, it should be noted that in this embodiment, a quantity of BWPs configured for the i$^{th}$ cell in the K cells may be greater than the total quantity of BWPs that are of the i$^{th}$ cell and that are capable of being indicated by different values of the BWP indicator field, and time domain resource allocation information corresponding to the BWPs configured for the i$^{th}$ cell may be reflected in the second time domain resource allocation list. For example, an initial BWP (for example, a BWP #0) and four dedicated BWPs (for example, the BWP #1, the BWP #2, the BWP #3, and the BWP #4) are configured for the i$^{th}$ cell, the four dedicated BWPs may be indicated by different values of the BWP indicator field (where for example, a value "00" of the BWP indicator field indicates the BWP #1, a value "01" of the BWP indicator field indicates the BWP #2, a value "10" of the BWP indicator field indicates the BWP #3, and a value "11" of the BWP indicator field indicates the BWP #4), and the BWP #0 cannot be indicated by the BWP indicator field. However, both time domain resource allocation information corresponding to the initial BWP and time domain resource allocation information corresponding to the four dedicated BWPs may be reflected in the second time domain resource allocation list.

For ease of understanding, a possible form of the second time domain resource allocation list in this embodiment is described with reference to Table 6.

Table 6

| Index | Cell 1 | | | | | Cell 2 | | | | | Cell 3 | | | | | Cell 4 | | | | |
|---|---|---|---|---|---|---|---|---|---|---|---|---|---|---|---|---|---|---|---|---|
| | BWP #0 | BWP #1 | BWP #2 | BWP #3 | BWP #4 | BWP #0 | BWP #1 | BWP #2 | BWP #3 | BWP #4 | BWP #0 | BWP #1 | BWP #2 | BWP #3 | BWP #4 | BWP #0 | BWP #1 | BWP #2 | BWP #3 | BWP #4 |
| **0** | 3 | 2 | 1 | 5 | 5 | 3 | 2 | 4 | 1 | 1 | 0 | 2 | 4 | 7 | 7 | 3 | 2 | 6 | 8 | 8 |
| **1** | 3 | 1 | 1 | 5 | 5 | 2 | 2 | 4 | 1 | 1 | 0 | 3 | 4 | 7 | 7 | 3 | 2 | 5 | 2 | 2 |
| **2** | ... | ... | ... | ... | | ... | ... | ... | ... | | ... | ... | ... | ... | | ... | ... | ... | ... | |
| **...** | ... | ... | ... | ... | | ... | ... | ... | ... | | ... | ... | ... | ... | | ... | ... | ... | ... | |

Further, in this embodiment, after receiving the second configuration information and the second DCI, the terminal device may determine, based on the second DCI and the second configuration information, BWPs used for data transmission in different cells and time domain resource allocation information corresponding to the BWPs. The method procedure shown in FIG. 8 further includes the following step:

S830: The terminal device determines a BWP used for data transmission and time domain resource allocation information corresponding to the BWP.

For step S830, refer to the foregoing descriptions of step S730. Details are not described herein again.

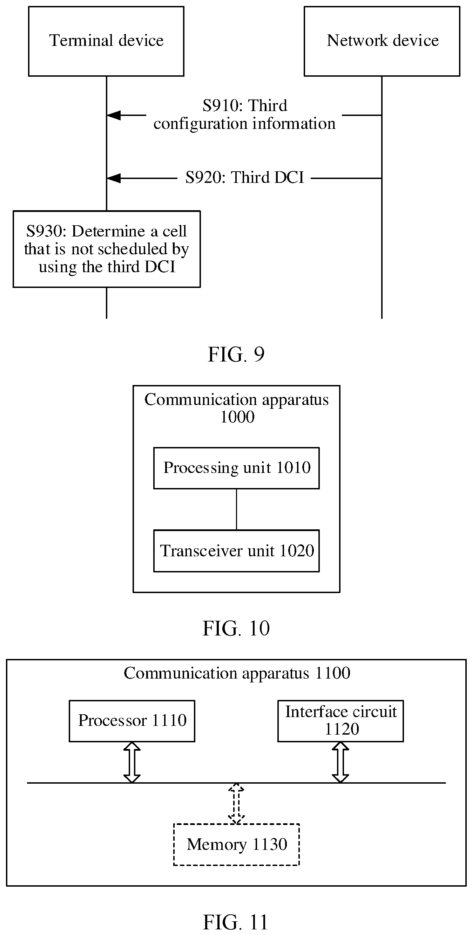

This application further provides a communication method. For ease of understanding, the following describes the communication method in detail with reference to FIG. 9.

FIG. 9 is a schematic flowchart of a communication method according to this application. The method includes the following steps.

S910: A network device sends third configuration information to a terminal device. Correspondingly, the terminal device receives the third configuration information from the network device.

Specifically, the third configuration information indicates a scheduled cell list. The scheduled cell list includes at least one element, the at least one element includes a third element, and the third element indicates a cell scheduled by using a DCI used for multi-cell scheduling.

Each element in the scheduled cell list may indicate a cell scheduled by using the DCI used for multi-cell scheduling, and the third element may be any one of the at least one element. The cell scheduled by using the DCI may be a carrier scheduled by using the DCI.

For example, the scheduled cell list in this embodiment may be understood as a scheduled cell table, or may be referred to as a sequence or an array. When the scheduled cell list is referred to as a scheduled cell table, one element in the scheduled cell list may also be referred to as a row (an entry) in the scheduled cell table.

By way of example and not limitation, in this embodiment, the network device may send the scheduled cell list to the terminal device by using higher layer signaling (for example, RRC signaling). Alternatively, the network device may send the scheduled cell list to the terminal device in another manner, for example, provide the scheduled cell list for the terminal device through a notification procedure or a subscription procedure.

For ease of understanding, a possible form of the scheduled cell list sent by the network device to the terminal device in this embodiment is briefly described with reference to the following Table 7.

For example, a scheduled cell set includes four cells, which are respectively {cell 1, cell 2, cell 3, cell 4}, and the scheduled cell list configured by the network device by using RRC signaling is shown in the following Table 7.

Table 7

| Index (index) | Cell set (Cell combination) |
|---|---|
| 0 | cell 1 and cell 2 |
| 1 | cell 1, cell 2, and cell 3 |
| 2 | cell 3 and cell 4 |
| 3 | cell 2, cell 3, and cell 4 |
| ... | ... |

It can be learned from Table 7 that each row or entry in the scheduled cell list includes at least one cell, and a quantity of cells included in each row is a cell currently scheduled by using a DCI.

It should be understood that, for a co-scheduled cell set, when the network device configures a scheduled cell list (or table) by using RRC, a scheduled cell indicator field in the DCI exists, and the field indicates a row of cell combination (which may be understood as a row) in the scheduled cell list configured by using the RRC.

It should be further understood that Table 7 is merely an example, and does not constitute any limitation on the protection scope of this application.

S920: The network device sends a third DCI to the terminal device. Correspondingly, the terminal device receives the third DCI from the network device.

Specifically, the third DCI is used to schedule data channels in C cells. The third DCI includes a scheduled cell indicator (scheduled cell indicator) field and a frequency domain resource allocation (frequency domain resource allocation, FDRA) field. The scheduled cell indicator field indicates the C cells. The C cells are cells (for example, cells in a row in the table) indicated by the third element in the scheduled cell list. The frequency domain resource allocation field indicates frequency domain information corresponding to each of the C cells.

For example, when the cells scheduled by using the third DCI are the cell 3 and the cell 4, the scheduled cell indicator field in the third DCI indicates that the index is 2. The terminal device may learn, with reference to the scheduled cell list and the scheduled cell indicator field in the third DCI, that the cells currently scheduled by using the third DCI are the cell 3 and the cell 4, and may learn of, with reference to the frequency domain resource allocation field in the third DCI, frequency domain information corresponding to the cell 3 currently scheduled by using the third DCI and frequency domain information corresponding to the cell 4 currently scheduled by using the third DCI.

Further, in this embodiment, the terminal device may determine, based on frequency domain information respectively corresponding to a plurality of cells scheduled by using the third DCI, a specific scheduled cell (for example, determine that one or more of the C cells cannot be scheduled by using the third DCI). The method procedure shown in FIG. 9 further includes the following step:

S930: The terminal device determines a cell that is not scheduled by using the third DCI.

The terminal device determines, based on the frequency domain information corresponding to each of the C cells, a cell that is in the C cells and that cannot be scheduled by using the third DCI. In this embodiment, when a configured value of an FDRA field corresponding to one or more cells in the cells indicated by the scheduled cell indicator field in the third DCI is an invalid value, the one or more cells are not scheduled by using the third DCI.

For example, the invalid value of the FDRA specifically means that: when a frequency domain resource allocation manner is a type 0 (type 0), all bits in the FDRA field corresponding to the cell are set to 0; or when a frequency domain resource allocation manner is a type 1 (type 1), all bits in the FDRA field corresponding to the cell are set to 1; or when a

frequency domain resource allocation manner is a resource allocation manner featuring dynamic switching, all bits in the FDRA field corresponding to the cell are set to 0 or 1. The frequency domain resource allocation manner is configured by using higher layer signaling (for example, configured by using RRC). Details are not described herein.

By way of example and not limitation, the terminal device determines, when a frequency domain resource allocation manner corresponding to a third cell in the C cells is the type 0, and all bits in a frequency domain resource allocation field corresponding to the third cell are set to 0, that the third cell cannot be scheduled by using the third DCI; or the terminal device determines, when a frequency domain resource allocation manner corresponding to a third cell in the C cells is the type 1, and all bits in a frequency domain resource allocation field corresponding to the third cell are set to 1, that the third cell cannot be scheduled by using the third DCI; or the terminal device determines, when a frequency domain resource allocation manner corresponding to a third cell in the C cells is the resource allocation manner featuring dynamic switching, and all bits in a frequency domain resource allocation field corresponding to the third cell are set to 1 or 0, that the third cell cannot be scheduled by using the third DCI.

For example, when a base station configures the scheduled cell list, the scheduled cell indicator field in the third DCI exists, and an indicated entry includes three cells: the cell 1, the cell 2, and the cell 3. If an FDRA value corresponding to the cell 2 is an invalid value, the cell 2 is not scheduled by using the third DCI. UE determines, with reference to the scheduled cell indicator field and a setting of an FDRA value of each cell, that actual cells currently scheduled by using the third DCI are the cell 1 and the cell 3.

According to the communication method shown in FIG. 9, in a scenario in which multi-cell scheduling is implemented by using a single DCI, in the communication method, the terminal device may determine, based on values of frequency domain resource allocation fields that correspond to different cells and that are carried in the single DCI, whether a cell is scheduled. Therefore, without increasing a size (size) of the single DCI, the terminal device determines, by parsing a frequency domain resource allocation field in the single DCI, a cell that cannot be scheduled and that is in a plurality of cells scheduled by using the single DCI, to avoid invalid scheduling when there is no frequency domain resource for a cell, thereby improving flexibility of implementing multi-cell scheduling by using the single DCI.

It should be understood that sequence numbers of the foregoing processes do not mean an execution sequence. The execution sequence of the processes should be determined based on functions and internal logic of the processes, and should not constitute any limitation on implementation processes of embodiments of this application.

It should be further understood that in embodiments of this application, unless otherwise specified or logically conflicted, terms and/or descriptions in different embodiments are consistent and may be mutually referenced, and technical features in different embodiments may be combined, based on an internal logical relationship thereof, to form a new embodiment.

It should be further understood that in some of the foregoing embodiments, devices in an existing network architecture are mainly used as examples for description (for example, the network device and the terminal device). It should be understood that specific forms of the devices are not limited in embodiments of this application. For example, all devices that can implement a same function in the future are applicable to embodiments of this application.

It may be understood that, in the foregoing method embodiments, the methods and operations implemented by a device (for example, the network device or the terminal device) may also be implemented by a component (for example, a chip or a circuit) of the device.

The foregoing describes in detail the time domain resource indication method provided in embodiments of this application with reference to FIG. 7 and FIG. 8. The foregoing time domain resource indication method is mainly described from a perspective of interaction between the terminal device and the network device. It may be understood that, to implement the foregoing functions, the terminal device and the network device include corresponding hardware structures and/or software modules for performing the functions.

The communication method provided in embodiments of this application is further described in detail with reference to FIG. 9. The foregoing communication method is mainly described from a perspective of interaction between the terminal device and the network device. It may be understood that, to implement the foregoing functions, the terminal device and the network device include corresponding hardware structures and/or software modules for performing the functions.

It may be understood that to implement functions in the foregoing embodiments, the base station and the terminal include corresponding hardware structures and/or software modules for performing various functions. A person skilled in the art should be readily aware that, with reference to the units and method steps in the examples described in embodiments disclosed in this application, this application can be implemented by hardware or a combination of hardware and computer software. Whether a function is performed by hardware or hardware driven by computer software depends on a particular application scenario and a design constraint condition of the technical solutions.

FIG. 10 and FIG. 11 are diagrams of possible structures of communication apparatuses according to embodiments of this application. These communication apparatuses may be configured to implement the functions of the terminal or the base station in the foregoing method embodiments, and therefore can also achieve beneficial effects of the foregoing method embodiments. In embodiments of this application, the communication apparatus may be one of the

terminals 120a to 120j shown in FIG. 1, or may be the base station 110a or 110b shown in FIG. 1, or may be a module (for example, a chip) used in the terminal or the base station.

As shown in FIG. 10, a communication apparatus 1000 includes a processing unit 1010 and a transceiver unit 1020. The communication apparatus 1000 is configured to implement a function of the terminal or the base station in the method embodiments shown in FIG. 7, FIG. 8, or FIG. 9.

When the communication apparatus 1000 is configured to implement a function of the terminal in the method embodiments shown in FIG. 7, the transceiver unit 1020 is configured to receive first configuration information from a network device, where the first configuration information indicates a first time domain resource allocation list, the first time domain resource allocation list includes at least one element, the at least one element includes a first element, the first element indicates time domain resource allocation information (for example, time domain resource allocation indexes) of M BWPs of K cells, $M = \sum_{i=1}^{K} M_i$, $M_i$ is a total quantity of BWPs that are of an i^th cell in the K cells and that are capable of being indicated by a BWP indicator field, the BWP indicator field is a field in a DCI used for multi-cell scheduling, $M_i$ is a positive integer, and i is an integer less than or equal to K. The transceiver unit 1020 is further configured to receive, from the network device, a first downlink control information DCI used to schedule data channels in C cells, where the first DCI includes the BWP indicator field, the BWP indicator field indicates C BWPs of the C cells, and the C BWPs are in one-to-one correspondence with the C cells.

Alternatively, when the communication apparatus 1000 is configured to implement a function of the terminal in the method embodiments shown in FIG. 8, the transceiver unit 1020 is configured to receive second configuration information from a network device, where the second configuration information indicates a second time domain resource allocation list. The second time domain resource allocation list includes at least one element, the at least one element includes a second element, the second element indicates time domain resource allocation information (for example, time domain resource allocation indexes) of M BWPs of K cells, $M = \sum_{i=1}^{K} M_i$, $M_i$ is a total quantity of BWPs configured for an $i^{th}$ cell in the K cells, $M_i$ is a positive integer, and i is an integer less than or equal to K. The transceiver unit 1020 is further configured to receive a second DCI from the network device, where the second DCI is used to schedule data channels in C cells, the second DCI includes a BWP indicator field, the BWP indicator field indicates C BWPs of the C cells, and the C BWPs are in one-to-one correspondence with the C cells. In other words, the BWP indicator field indicates one BWP of each of the C cells.

Alternatively, when the communication apparatus 1000 is configured to implement a function of the terminal in the method embodiments shown in FIG. 9, the transceiver unit 1020 is configured to receive third configuration information from a network device, where the second configuration information indicates a scheduled cell list. The scheduled cell list includes at least one element, the at least one element includes a third element, and the third element indicates a cell scheduled by using a DCI used for multi-cell scheduling. The transceiver unit 1020 is further configured to receive a third DCI from the network device, where the third DCI is used to schedule data channels in C cells, the third DCI includes a scheduled cell indicator field and a frequency domain resource allocation field, the scheduled cell indicator field indicates the C cells, and the frequency domain resource allocation field indicates frequency domain information corresponding to each of the C cells. The processing unit 1010 is configured to determine, based on the frequency domain information respectively corresponding to the C cells, a cell that is in the C cells and that is not scheduled by using the third DCI.

When a communication apparatus 1300 is configured to implement a function of the base station in the method embodiments shown in FIG. 7, the transceiver unit 1020 is configured to send first configuration information to a terminal device, where the first configuration information indicates a first time domain resource allocation list, the first time domain resource allocation list includes at least one element, the at least one element includes a first element, the first element indicates time domain resource allocation information (for example, time domain resource allocation indexes) of M BWPs of K cells, $M = \sum_{i=1}^{K} M_i$, $M_i$ is a total quantity of BWPs that are of an $i^{th}$ cell in the K cells and that are capable of being indicated by a BWP indicator field, the BWP indicator field is a field in a DCI used for multi-cell scheduling. The transceiver unit 1020 is further configured to send, to the terminal device, a first downlink control information DCI used to schedule data channels in the C cells, where the first DCI includes a BWP indicator field, the BWP indicator field indicates C BWPs of the C cells, and the C BWPs are in one-to-one correspondence with the C cells.

Alternatively, when the communication apparatus 1000 is configured to implement a function of the terminal in the method embodiments shown in FIG. 8, the transceiver unit 1020 is configured to send second configuration information to a terminal device, where the second configuration information indicates a second time domain resource allocation list. The second time domain resource allocation list includes at least one element, the at least one element includes a second element, the second element indicates time domain resource allocation information (for example, time domain resource allocation indexes) of M BWPs of K cells, $M = \sum_{i=1}^{K} M_i$, $M_i$ is a total quantity of BWPs configured for an $i^{th}$ cell in the K cells, $M_i$ is a positive integer, and i is an integer less than or equal to K. The transceiver unit 1020 is further configured to

send a second DCI to the terminal device, where the second DCI is used to schedule data channel in C cells, the second DCI includes a BWP indicator field, the BWP indicator field indicates C BWPs of the C cells, and the C BWPs are in one-to-one correspondence with the C cells. In other words, the BWP indicator field indicates one BWP of each of the C cells.

For more detailed descriptions of the foregoing processing unit 1010 and transceiver unit 1020, refer to related descriptions in the method embodiment shown in FIG. 7, FIG. 8, or FIG. 10.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to: store instructions executed by the processor 1110, store input data required for running instructions by the processor 1110, or store data generated after the processor 1110 runs instructions.

When the communication apparatus 1100 is configured to implement a function of the apparatus shown in FIG. 10, the processor 1110 is configured to implement a function of the foregoing processing unit 1010, and the interface circuit 1120 is configured to implement a function of the foregoing transceiver unit 1020.

When the communication apparatus is a chip used in a terminal, the chip of the terminal implements a function of the terminal in the foregoing method embodiments. The chip of the terminal receives, through another module (for example, a radio frequency module or an antenna) in the terminal, information sent by a base station to the terminal. Alternatively, the chip of the terminal sends information to another module (for example, a radio frequency module or an antenna) in the terminal, where the information is sent by the terminal to a base station.

When the communication apparatus is a module used in a base station, the module of the base station implements a function of the base station in the foregoing method embodiments. The module of the base station receives information from another module (for example, a radio frequency module or an antenna) in the base station, where the information is sent by a terminal to the base station. Alternatively, the module of the base station sends information to another module (for example, a radio frequency module or an antenna) in the base station, where the information is sent by the base station to a terminal. The module of the base station herein may be a baseband chip of the base station, or may be a CU, a DU, or another module, or may be an apparatus in an O-RAN architecture, for example, an apparatus like an open CU or an open DU.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented according to software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to a processor, to cause the processor to read information from the storage medium and write information into the storage medium. The storage medium may alternatively be a component of the processor. The processor and the storage medium may be located in an ASIC. In addition, the ASIC may be located in the base station or the terminal. The processor and the storage medium may alternatively exist in the base station or the terminal as discrete components.

All or some of the foregoing embodiments may be implemented by using software, hardware, firmware, or any combination thereof. When software is used for implementation, all or some of the embodiments may be implemented in a form of a computer program product. The computer program product includes one or more computer programs or instructions. When the computer programs or the instructions are loaded and executed on a computer, all or some of the procedures or functions according to embodiments of this application are performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or logically conflicted, terms and/or descriptions in

different embodiments are consistent and may be mutually referenced, and technical features in different embodiments may be combined based on an internal logical relationship thereof, to form a new embodiment.

In this application, "indication" may include a direct indication and an indirect indication. When a piece of indication information is described as indicating A, the indication information may directly indicate A or indirectly indicate A, but it does not necessarily indicate that the indication information carries A.

"At least one" shown in this application means one or more, and "a plurality of" means two or more. In addition, in embodiments of this application, "first", "second", and various numbers (for example, "#1" and "#2") are merely used for distinguishing for ease of description, but are not used to limit the scope of embodiments of this application. Sequence numbers of the foregoing processes do not mean an execution sequence. The execution sequence of the processes should be determined based on functions and internal logic of the processes, and should not constitute any limitation on implementation processes of embodiments of this application. In addition, in embodiments of this application, terms such as "S710" are merely identifiers for ease of description, and do not limit a sequence of performing steps.

The term "and/or" in this specification describes only an association relationship between associated objects, and indicates that three relationships may exist. For example, A and/or B may indicate the following three cases: Only A exists, both A and B exist, and only B exists. In addition, the character "/" in this specification generally indicates an "or" relationship between the associated objects.

## Claims

**1.** A time domain resource indication method, comprising:

receiving first configuration information from a network device, wherein the first configuration information indicates a first time domain resource allocation list, the first time domain resource allocation list comprises at least one element, the at least one element comprises a first element, the first element indicates time domain resource allocation information of M bandwidth parts BWPs of K cells, K and M are positive integers, M is greater than or equal to K,

$M = \sum_{i=1}^{K} M_i$, $M_i$ is a total quantity of BWPs that are of an $i^{th}$ cell in the K cells and that are capable of being indicated by a BWP indicator field, the BWP indicator field is a field in a downlink control information DCI used for multi-cell scheduling, $M_i$ is a positive integer, and i is a positive integer less than or equal to K; and

receiving, from the network device, a first downlink control information DCI used to schedule data channels in C cells, wherein the first DCI comprises the BWP indicator field, the BWP indicator field indicates C BWPs of the C cells, the C BWPs are in one-to-one correspondence with the C cells, the C cells are cells in the K cells, C is a positive integer less than or equal to K, and the first DCI is the DCI used for multi-cell scheduling.

**2.** The method according to claim 1, wherein the first DCI further comprises a time domain resource allocation field, a scheduled cell set indicator field, and a scheduled cell indicator field, the time domain resource allocation field indicates the first element, the scheduled cell set indicator field indicates a first cell set, and the scheduled cell indicator field indicates the C cells in the first cell set; and the method further comprises:
determining, based on the first element, time domain resource allocation information respectively corresponding to the C BWPs of the C cells.

**3.** The method according to claim 2, wherein when a quantity of BWPs configured for a second cell in the C cells is greater than 2, and a quantity of BWPs configured for a first cell in the C cells is less than or equal to 2, a bit width of the BWP indicator field is 2 bits; and the method further comprises:
determining a first BWP of the first cell based on a value of a least significant bit in the BWP indicator field.

**4.** The method according to claim 2, wherein when a BWP that is of a first cell in the C cells and that is indicated by the BWP indicator field is a BWP that is not configured for the first cell, or when a BWP that is of a first cell and that is indicated by the BWP indicator field is a BWP in a dormant state, the method further comprises:

determining not to receive or send data in the first cell; or
determining to use an active BWP to perform data transmission in the first cell.

**5.** A time domain resource indication method, comprising:

sending first configuration information to a terminal device, wherein the first configuration information indicates a

first time domain resource allocation list, the first time domain resource allocation list comprises at least one element, the at least one element comprises a first element, the first element indicates time domain resource allocation information of M bandwidth parts BWPs of K cells, K and M are positive integers, M is greater than or equal to K, $M = \sum_{i=1}^{K} M_i$ , $M_i$ is a total quantity of BWPs that are of an i[th] cell in the K cells and that are capable of being indicated by a BWP indicator field, the BWP indicator field is a field in a downlink control information DCI used for multi-cell scheduling, $M_i$ is a positive integer, and i is a positive integer less than or equal to K; and sending, to the terminal device, a first downlink control information DCI used to schedule data channels in C cells, wherein the first DCI comprises the BWP indicator field, the BWP indicator field indicates C BWPs of the C cells, the C BWPs are in one-to-one correspondence with the C cells, the C cells are cells in the K cells, C is a positive integer less than or equal to K, and the first DCI is DCI used for multi-cell scheduling.

**6.** The method according to any one of claims 1 to 5, wherein the first element sequentially indicates, in ascending order of BWP identities of the $M_i$ BWPs of the i[th] cell, time domain resource allocation information of the $M_i$ BWPs.

**7.** The method according to any one of claims 1 to 6, wherein $N_i$ BWPs are configured for the i[th] cell, and $N_i$ is an integer greater than $M_i$.

**8.** The method according to any one of claims 1 to 7, wherein when four dedicated BWPs, in addition to an initial BWP, are configured for a first cell in the C cells, different values of the BWP indicator field indicate the four dedicated BWPs, and the different values of the BWP indicator field are in one-to-one correspondence with the four dedicated BWPs.

**9.** The method according to any one of claims 1 to 8, wherein when three dedicated BWPs, in addition to the initial BWP, are configured for a second cell in the C cells, different values of the BWP indicator field indicate the initial BWP and the three dedicated BWPs, and the different values of the BWP indicator field are in one-to-one correspondence with the initial BWP and the three dedicated BWPs.

**10.** A communication apparatus, comprising a module or a unit configured to perform the method according to any one of claims 1 to 9.

**11.** A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 9 through a logic circuit or by executing code instructions.

**12.** A chip, comprising a processor, wherein the processor is coupled to a memory, the memory is configured to store a computer program, and the processor is configured to execute the computer program stored in the memory, to implement the method according to any one of claims 1 to 9.

**13.** A computer-readable storage medium, wherein the storage medium stores a computer program or instructions, and when the computer program or the instructions are executed by a communication apparatus, the method according to any one of claims 1 to 9 is implemented.

**14.** A computer program product, comprising a computer program, wherein when the computer program is run, the method according to any one of claims 1 to 9 is implemented.

100
1000
120i
110a
200
120c
Core network
120j
120d
110b
120a
120f
120g
300
120h
Internet
120b
120e

FIG. 1

RRC
PCC
Cell #1
SCC #1
Cell #2
SCC #2
Cell #3

FIG. 2

CC #1
DCI #1
PDSCH/PUSCH
CC #2
DCI #2
PDSCH/PUSCH

FIG. 3

CC #1
DCI #1
PDSCH/PUSCH
DCI #2
CC #2
PDSCH/PUSCH

FIG. 4

Carrier of 50 MHz
BWP #1 of 25 MHz
BWP #2 of 10 MHz
BWP #3 of 50 MHz

FIG. 5

CC #1
Single DCI
PDSCH #1
CC #2
PDSCH #2

FIG. 6

Terminal device
Network device
S710: First configuration information
S720: First DCI
S730: Determine a BWP used for data transmission and time domain resource allocation information corresponding to the BWP

FIG. 7

Terminal device

Network device

S810: Second configuration information

S820: Second DCI

S830: Determine a BWP used for data transmission and time domain resource allocation information corresponding to the BWP

FIG. 8

Terminal device
Network device
S910: Third configuration information
S920: Third DCI
S930: Determine a cell that is not scheduled by using the third DCI

FIG. 9

Communication apparatus 1000
Processing unit 1010
Transceiver unit 1020

FIG. 10

Communication apparatus 1100
Processor 1110
Interface circuit 1120
Memory 1130

FIG. 11

**INTERNATIONAL SEARCH REPORT**

International application No.
**PCT/CN2024/127633**

**A. CLASSIFICATION OF SUBJECT MATTER**

H04W 72/0446(2023.01)i

According to International Patent Classification (IPC) or to both national classification and IPC

**B. FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT, DWPI, ENTXTC, CNKI, 3GPP: 指示, 配置, 时域资源分配, 表, 元素, 带宽部分, 多小区, 多载波, 调度, 下行控制信息, 字段, indicator, configuration, TDRA, time domain resource allocat+, assignment, table, element, BWP, bandwidth part, multi+, cell, carrier, schedule, DCI, downlink control information, field.

**C. DOCUMENTS CONSIDERED TO BE RELEVANT**

| Category* | Citation of document, with indication, where appropriate, of the relevant passages | Relevant to claim No. |
|---|---|---|
| A | US 2023217456 A1 (OFINNO, LLC.) 06 July 2023 (2023-07-06)<br>entire document | 1-14 |
| A | CN 114731629 A (HUAWEI TECHNOLOGIES CO., LTD.) 08 July 2022 (2022-07-08)<br>entire document | 1-14 |
| A | US 2022408472 A1 (NTT DOCOMO, INC.) 22 December 2022 (2022-12-22)<br>entire document | 1-14 |
| A | US 2023345460 A1 (SAMSUNG ELECTRONICS CO., LTD.) 26 October 2023 (2023-10-26)<br>entire document | 1-14 |
| A | WO 2022094775 A1 (GUANGDONG OPPO MOBILE TELECOMMUNICATIONS CORP., LTD.) 12 May 2022 (2022-05-12)<br>entire document | 1-14 |
| A | WO 2023141074 A1 (INTEL CORP.) 27 July 2023 (2023-07-27)<br>entire document | 1-14 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 November 2024** | **30 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2024/127633**

**C. DOCUMENTS CONSIDERED TO BE RELEVANT**

| Category* | Citation of document, with indication, where appropriate, of the relevant passages | Relevant to claim No. |
|---|---|---|
| A | LG ELECTRONICS. "R1-2204631, Discussion on Multi-Cell PUSCH/PDSCH Scheduling with a Single DCI" *3GPP tsg_ran\wg1_rl1,* No. tsgr1_109-e, 29 April 2022 (2022-04-29), entire document | 1-14 |

Form PCT/ISA/210 (second sheet) (July 2022)

**INTERNATIONAL SEARCH REPORT**
**Information on patent family members**

International application No.
**PCT/CN2024/127633**

| Patent document cited in search report | Publication date (day/month/year) | Patent family member(s) | Publication date (day/month/year) |
|---|---|---|---|
| US 2023217456 A1 | 06 July 2023 | WO 2022066599 A1 | 31 March 2022 |
| CN 114731629 A | 08 July 2022 | None | |
| US 2022408472 A1 | 22 December 2022 | CA 3161293 A1 | 20 May 2021 |
| | | JPWO 2021095267 A1 | 20 May 2021 |
| | | JP 2024120084 A | 03 September 2024 |
| | | WO 2021095267 A1 | 20 May 2021 |
| US 2023345460 A1 | 26 October 2023 | WO 2023204657 A1 | 26 October 2023 |
| WO 2022094775 A1 | 12 May 2022 | None | |
| WO 2023141074 A1 | 27 July 2023 | US 2024251401 A1 | 25 July 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311473225